# FASCICULE DE BREVET EUROPEEN

(11) **EP 1 353 458 B1**
(45) Date de publication et mention de la délivrance du brevet: **30.03.2005**
(21) Numéro de dépôt: 03290744.6
(22) Date de dépôt: 25.03.2003
(51) Int. Cl.: H04B 10/08

(54) **Dispositif de mesure et/ou de contrôle dynamique de perte de puissance dans une ligne de transmission optique, et procédé associé.**
Vorrichtung zur Messung und/oder zur dynamischen Kontrolle von Verlustleistung in einer optischen Übertragungsleitung und zugehöriges Verfahren
Device for measuring and/or dynamically controlling power loss in an optical transmission line and method therefor

(30) Priorité: 08.04.2002 FR 0204340
(43) Date de publication de la demande: 15.10.2003
(73) Titulaire: ALCATEL, 75008 Paris (FR)
(72) Inventeur: Bisson, Arnaud, Bât. C, 91400 Orsay (FR); Michaud, Alice, 75013 Paris (FR); Rossi, Emmanuel, 75014 Paris (FR); Balland, Guy, 91700 Ste Genevieve des Bois (FR)
(74) Mandataire: Sciaux, Edmond

(56) Documents cités:
- EP-A- 0 552 937
- EP-A- 0 782 279
- US-A- 5 466 923
- US-B1- 6 366 381

## Description

L'invention concerne le domaine des dispositifs optiques, et plus particulièrement celui de la mesure et/ou du contrôle des pertes de puissance dans les lignes de transmission de signaux optiques.

En raison de leur composants (fibres optiques, amplificateurs, etc), les lignes de transmission optique introduisent des pertes de puissance qui nuisent aux performances de transmission et peuvent, dans certaines circonstances, entraîner des erreurs de traitement, voire même des pertes de données. Ces pertes de puissance optique sont généralement liées au vieillissement des composants et/ou aux interventions de maintenance ou de réparation.

Afin de suivre l'évolution de ces pertes de puissance, il a été proposé de mesurer périodiquement la puissance optique des signaux en sortie des fibres optiques. Or, ce type de mesure n'est pas discriminant puisqu'il ne permet pas de différencier une perte introduite par une fibre optique d'une perte introduite par un amplificateur optique qui alimente la fibre en signaux optiques.

Le document **US 6.366.381** décrit un procédé pour mesurer à distance la puissance à la sortie d'un répéteur, ce répéteur faisant partie d'une liaison optique de grande longueur ; et transmettre le résultat de cette mesure à un premier terminal situé à une première extrémité de cette liaison. Un photodétecteur est placé à la sortie du répéteur et fournit un signal électrique représentant la puissance de sortie. Pour transmettre le résultat de cette mesure au premier terminal, on module le gain d'un amplificateur à fibre, que comporte le répéteur. Cet amplificateur amplifie en particulier un signal optique de surveillance qui est émis par un second terminal, situé à la seconde extrémité de la liaison. L'indice de modulation en amplitude est proportionnel à la puissance de sortie mesurée. Il suffit ensuite de mesurer l'indice de modulation du signal de surveillance, lorsqu'il arrive dans le premier terminal, pour connaître la puissance de sortie du répéteur.

Il a également été proposé de mesurer les puissances optiques à l'entrée et à la sortie de la fibre, puis de les envoyer à un module de comparaison à l'aide de signaux binaires de supervision. Ce type de détection nécessite la présence d'un canal dédié à la supervision, lequel peut être indisponible, et requiert un temps de traitement qui peut s'avérer inadapté à une procédure d'ajustement dynamique de la puissance optique.

L'invention a pour but de mesurer les pertes dans une fibre, en évitant les inconvénients précités, notamment en évitant l'utilisation d'un canal de supervision, et en évitant que la mesure soit faussée lorsque la puissance appliquée à la fibre varie à cause d'une variations du gain d'un amplificateur situé en amont de la fibre.

Elle propose à cet effet un dispositif optique de mesure dynamique de perte de puissance dans une ligne de transmission comprenant au moins une fibre optique munie d'une entrée pouvant recevoir des signaux optiques et d'une sortie pouvant délivrer ces signaux.

Ce dispositif se caractérise par le fait qu'il comporte i) des moyens de modulation placés en amont de l'entrée de la fibre et capables de moduler l'amplitude des signaux avec un signal de modulation basse fréquence présentant un indice de modulation inversement proportionnel à la puissance d'entrée des signaux optiques, et ii) des moyens de détection placés en aval de la sortie de la fibre et capables d'extraire des signaux modulés des informations primaires représentatives de l'amplitude de sortie du signal de modulation (et par conséquent également représentatives de la perte de puissance réelle dans la fibre) et de déduire de ces informations primaires des informations secondaires représentatives d'une variation de perte de puissance dans la fibre.

On entend ici par « puissance d'entrée » et « puissance de sortie » respectivement les puissances optiques des signaux (d'entrée) qui pénètrent dans la fibre par son entrée et des signaux (de sortie ou modulés) qui débouchent de la fibre par sa sortie.

Grâce à ce dispositif optique, on peut suivre de façon dynamique l'évolution de la perte de puissance introduite par la fibre optique. En effet, l'amplitude de la modulation dépendant de la puissance d'entrée, une perte introduite par la fibre aura un effet sur l'amplitude détectée. Par contre, une perte introduite par l'amplificateur, ne modifie pas l'amplitude de la modulation, et par conséquent ne fausse pas la mesure des variations de perte dans la fibre, parce que le procédé consiste à faire varier l'indice de modulation (rapport de l'amplitude de modulation sur l'amplitude du signal non modulé) inversement proportionnellement à la puissance des signaux optiques à l'entrée de la fibre. Ceci tend à augmenter l'amplitude de la modulation quand le gain de l'amplificateur se réduit, et inversement.

Préférentiellement, les moyens de détection comprennent des moyens de comparaison capables de comparer les informations primaires à une valeur choisie représentative d'une perte de puissance nominale choisie, et de délivrer des informations secondaires représentatives de l'écart entre les informations primaires et cette valeur choisie. Dans ce cas, les moyens de comparaison délivrent, de préférence, soit des informations secondaires représentatives de l'amplitude de l'écart, soit des informations secondaires à deux états, un premier état étant associé à un écart positif, et un second état étant associé à un écart négatif ou nul.

Selon une autre caractéristique de l'invention, le dispositif peut comporter des moyens de contrôle couplés aux moyens de détection et à la sortie de la fibre, et capables, en cas de détection d'une variation (augmentation) de la perte de puissance dans la fibre, de modifier la puissance des signaux optiques délivrés par la sortie de la fibre en fonction de la variation de perte de puissance détectée.

Ainsi, en cas de variation (augmentation) de la perte de puissance dans la fibre, le dispositif peut effectuer un ajustement dynamique de manière à conserver une perte de puissance nominale sensiblement constante, ou en d'autres termes de manière à compenser totalement ou partiellement l'augmentation des pertes optiques de la fibre de transmission.

Par exemple, les moyens de contrôle peuvent comprendre un atténuateur optique variable (ou « VOA ») couplé à la sortie de la fibre, en amont des moyens de détection. Ce VOA atténuant la puissance des signaux modulés en sortie de la fibre, les moyens de contrôle peuvent leur demander de réduire ladite atténuation en cas de détection d'une augmentation (non autorisée) de la perte de puissance introduite par la fibre.

Afin de ne pas dégrader les signaux et/ou perturber les mesures sur la portion de fibre (ou « span ») suivante de la ligne de transmission, on peut prévoir un module auxiliaire pour supprimer des signaux transmis, sortis de la fibre, la modulation d'amplitude introduite par les moyens de modulation.

L'invention propose également une installation de transmission de signaux optiques, véhiculant des données, comprenant une ligne de transmission constituée d'une multiplicité de fibres optiques, raccordées par des amplificateurs optiques délivrant chacun des signaux et couplées à des dispositifs optiques du type de celui décrit ci-avant et délivrant, de préférence, des signaux de modulation de fréquences différentes.

L'invention propose en outre un procédé de mesure dynamique de perte de puissance dans une ligne de transmission comprenant au moins une fibre optique comportant une entrée propre à recevoir des signaux optiques et une sortie pour délivrer lesdits signaux.

Ce procédé se caractérise par le fait qu'il consiste à moduler l'amplitude des signaux optiques avec un signal de modulation basse fréquence qui présente un indice de modulation inversement proportionnel à la puissance d'entrée des signaux optiques, puis i) à extraire des signaux modulés des informations primaires représentatives de l'amplitude de sortie du signal de modulation, et ii) à déduire de ces informations primaires des informations secondaires représentatives d'une variation de perte de puissance dans la fibre optique.

Egalement de préférence, on procède à une comparaison entre les informations primaires et une valeur choisie représentative d'une perte de puissance nominale choisie, de manière à délivrer des informations secondaires représentatives de l'écart entre les informations primaires et la valeur choisie. Dans ce cas, les informations secondaires délivrées peuvent être représentatives de l'amplitude de l'écart ou à deux états, un premier état étant associé à un écart positif, et un second état étant associé à un écart négatif ou nul.

Selon une autre caractéristique du procédé, en cas de détection d'une variation (augmentation) de la perte de puissance dans la fibre, on peut modifier la puissance des signaux modulés, délivrés par la sortie de la fibre, en fonction de cette variation détectée, de manière à conserver une perte sensiblement constante (égale à la perte nominale).

Egalement de préférence, on peut procéder à la suppression de la modulation d'amplitude en sortie de la fibre optique.

Par ailleurs, lorsque l'on est en présence d'une multiplicité de fibres optiques raccordées par des amplificateurs optiques, délivrant chacun des signaux amplifiés, on peut procéder à l'entrée des différentes fibres à des modulations d'amplitude à l'aide de signaux de modulation de fréquences différentes.

Le dispositif, l'installation et le procédé selon l'invention sont tout particulièrement adaptés, bien que de façon non exclusive, à la mesure et/ou au contrôle dynamique des pertes de puissance sur les lignes de transmission optique utilisées dans le domaine des télécommunications, notamment lorsque lesdites lignes transportent des canaux de données multiplexés en longueur d'onde (ou « WDM » pour Wavelength-Division Multiplexing).

D'autres caractéristiques et avantages de l'invention apparaîtront à l'examen de la description détaillée ci-après, et des dessins annexés, sur lesquels :

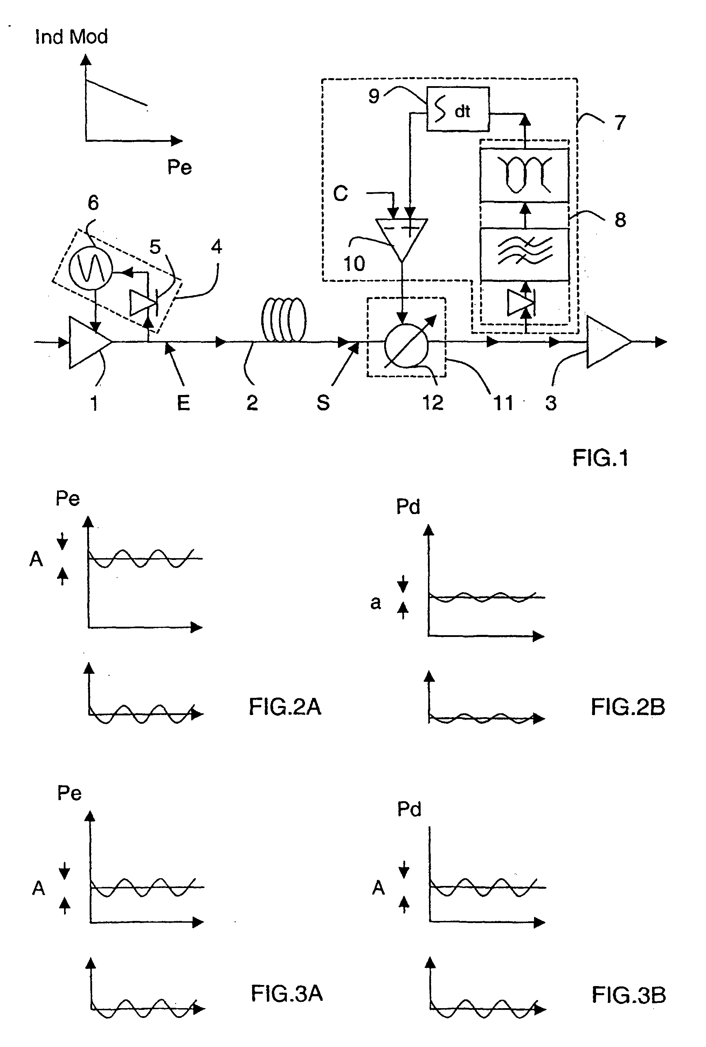

- la figure 1 illustre de façon schématique un exemple de réalisation d'un dispositif optique selon l'invention,
- les figures 2A et 2B sont des diagrammes illustrant des exemples de niveau de puissance et de modulation d'amplitude pour les signaux optiques respectivement à l'entrée (Pe) et à la sortie (Pd) de la fibre, dans le cas d'une perte de puissance introduite par la fibre optique, le diagramme du haut illustrant plus précisément l'amplitude de modulation avec la composante continue, et le diagramme du bas illustrant l'amplitude de modulation après suppression de la composante continue,
- les figures 3A et 3B sont des diagrammes illustrant des exemples de niveau de puissance et de modulation d'amplitude pour les signaux optiques respectivement à l'entrée (Pe) et à la sortie (Pd) de la fibre, dans le cas d'une réduction de la puissance des signaux optiques délivrés par l'amplificateur optique d'entrée, le diagramme du haut illustrant plus précisément l'amplitude de modulation avec la composante continue, et le diagramme du bas illustrant l'amplitude de modulation après suppression de la composante continue.

Les dessins annexés sont, pour l'essentiel, de caractère certain. En conséquence, ils pourront non seulement servir à compléter l'invention, mais aussi contribuer à sa définition, le cas échéant.

On se réfère tout d'abord à la **figure 1** pour décrire un exemple de réalisation d'un dispositif optique selon l'invention implanté sur une portion d'une ligne de transmission. Cette portion est constituée d'un premier amplificateur optique 1 (ou amplificateur d'entrée) raccordé à l'entrée E d'une fibre optique 2, pour lui délivrer des signaux optiques, véhiculant des données à transmettre, par exemple sous la forme d'agrégats multiplexés en longueurs d'onde (ou agrégats WDM). Dans l'exemple illustré, la sortie S de la fibre 2 est couplée à un second amplificateur optique 3 (ou amplificateur de sortie), raccordé à une autre portion de la ligne de transmission. Par ailleurs, la fibre optique 2 présente une perte de puissance nominale connue.

Le dispositif selon l'invention comporte tout d'abord un module de modulation 4 comprenant, dans l'exemple illustré, un circuit électronique raccordé, d'une part, à la sortie de l'amplificateur d'entrée 1 pour prélever une partie des signaux optiques amplifiés et, d'autre part, à une entrée de cet amplificateur d'entrée 1 pour lui fournir un signal de modulation, à basse fréquence, et tel que l'indice de la modulation d'amplitude obtenue (Ind Mod) soit inversement proportionnel à la puissance d'entrée Pe des signaux optiques. La fréquence du signal de modulation est choisie inférieure à la fréquence de coupure de l'amplificateur de sortie 3.

Pour fournir ce signal de modulation, le circuit comporte, notamment, une diode 5 délivrant une information représentative de la puissance optique Pe des signaux optiques et un générateur 6 délivrant un signal sinusoïdal tel que l'indice de modulation d'amplitude obtenu, Ind Mod, est inversement proportionnel à la puissance optique Pe des signaux, cette puissance étant représentée par l'information délivrée par la diode 5 (comme illustré par le diagramme de la partie supérieure gauche de la figure 1). Bien entendu, le générateur de signal de modulation 6 pourrait délivrer des signaux présentant d'autres formes.

. Ces signaux modulés circulent dans la fibre 2 jusqu'à sa sortie S où ils parviennent avec une puissance optique Pd et où une partie d'entre eux est prélevée (avec un séparateur optique) par un module de détection 7 du dispositif selon l'invention.

Ce module 7 est destiné, notamment, à mesurer l'amplitude des signaux de modulation, compris dans les signaux modulés prélevés, pour en déduire une éventuelle variation de perte de puissance dans la fibre 2, par rapport à sa perte nominale.

Dans l'exemple illustré, non limitatif, le module de détection 7 comprend un circuit électronique 8 comportant, notamment, un filtre passe bande, de préférence, pour sélectionner le signal de modulation, et un circuit à diode(s), destiné à redresser le signal modulé pour permettre à un intégrateur 9, placé après lui, de mesurer l'amplitude de la modulation. L'intégrateur 9 délivre donc des informations primaires représentatives de l'amplitude de sortie du signal de modulation.

L'amplitude de la modulation initiale étant fonction de la puissance d'entrée Pe délivrée par l'amplificateur d'entrée 1 en amont de la fibre 2, l'amplitude de sortie mesurée (et donc les informations primaires) sont par conséquent également représentatives de la perte de puissance introduite par la fibre 2. Il en résulte qu'à partir de la connaissance de la perte de puissance nominale et de la perte de puissance mesurée, on peut en déduire des secondes informations représentatives de la variation de perte de puissance dans la fibre.

La puissance optique Pe et l'amplitude de modulation A sont illustrées sur la **figure 2A** lorsque l'amplificateur d'entrée 1 fonctionne à pleine puissance, et sur la **figure 3A** (lorsque l'amplificateur d'entrée 1 fonctionne à une puissance plus faible (-3dB).

Lorsque la puissance d'entrée Pe a sa valeur nominale, l'amplitude de la modulation a une valeur nominale A, et l'indice de modulation Ind Mod a aussi une valeur nominale, par exemple 4%. Toute variation de perte de puissance introduite par la fibre 2, par rapport à la perte nominale, se traduit par une diminution de l'amplitude de modulation, qui passe de la valeur A à la valeur a comme illustré sur la **figure 2B.**

En revanche, lorsque la puissance optique des signaux modulés, qui alimentent la fibre 2, est réduite à cause d'une variation de gain de l'amplificateur d'entrée 1, l'amplitude de modulation est maintenue égale à sa valeur nominale A, parce que le circuit 6 augmente l'indice de modulation, inversement proportionnellement. Par exemple, si le gain de l'amplificateur 1 se réduit de 3dB, le circuit 6 augmente l'indice de modulation d'amplitude de 2% à 4%, ce qui maintient l'amplitude de modulation a la valeur A, comme illustré sur les **figures 3A et 3B**. Il apparaît que l'amplitude de la modulation à la sortie de la fibre mesure les pertes dans la fibre, sans que cette mesure puisse être faussée par des variations du gain de l'amplificateur 1 situé en amont de la fibre. Cette mesure fiable peut ensuite être utilisée pour commander des moyens compensant les variations de perte propres à la fibre.

Le module de détection 7, qui connaît la valeur nominale A de l'amplitude de modulation, délivre des informations primaires représentatives de la perte de puissance réelle dans la fibre 2. Préférentiellement, les informations primaires alimentent l'entrée non-inverseuse (+) d'un comparateur 10, dont l'entrée inverseuse (-) est alimentée par une consigne C représentative de la valeur nominale des pertes autorisées dans la fibre 2 (par exemple égale à 20 dB). La consigne C permet donc au comparateur 10 d'estimer la différence (ou l'écart) entre la perte nominale autorisée et la perte réelle introduite par la fibre 2.

Le comparateur 10 reçoit donc les informations primaires, les compare à la consigne C et délivre des informations secondaires représentatives de l'écart entre les informations primaires et C, ou en d'autres termes représentatives d'une variation de la perte de puissance dans la fibre 2 par rapport à une valeur nominale. Ces informations secondaires peuvent être soit directement représentatives de l'amplitude de l'écart mesuré, soit à deux états, un premier état, par exemple « haut », étant associé à un écart positif, et un second état, par exemple « bas », étant associé à un écart négatif ou nul.

Le dispositif selon l'invention peut également assurer l'ajustement de la puissance en sortie S de la fibre 2. Lorsque c'est le cas, comme illustré sur la figure 1, il comprend un module de contrôle 11 comportant un dispositif 12 capable de modifier la puissance des signaux modulés avant qu'ils ne parviennent à l'amplificateur de sortie 3. Ce dispositif 12 est, par exemple, un atténuateur optique variable, plus connu sous l'acronyme anglais VOA (pour « Variable Optical Attenuator »). Il est placé en sortie de la fibre 2 et en amont de l'entrée du circuit de détection 7. Par conséquent, les signaux modulés qui sont prélevés par le circuit de détection 7 font préalablement l'objet d'une atténuation par le VOA 12, de sorte qu'en cas de détection d'une variation (augmentation) de la perte de puissance dans la fibre 2, le module de contrôle 11 puisse ordonner audit VOA 12 de réduire l'atténuation (ou de compenser l'augmentation de perte dans la fibre), ce qui équivaut à amplifier les signaux modulés de sorte qu'ils retrouvent leur amplitude nominale.

Ainsi, lorsque le comparateur 10 délivre au module de contrôle 11 des informations secondaires placées dans l'état haut, par exemple, ce dernier ordonne au VOA 12 de réduire l'atténuation d'une valeur choisie. Par exemple, cette valeur choisie est sensiblement égale à 3 dB. En variante, lorsque les informations secondaires représentent l'amplitude de l'écart entre la perte nominale de la fibre (C) et sa perte réelle, le module de contrôle 11 ordonne au VOA 12 de réduire l'atténuation d'une valeur sensiblement égale à l'écart.

Ainsi, seule une variation de perte de puissance introduite par la fibre 2 entraîne un ajustement automatique de l'atténuation.

Afin d'éviter que la modulation d'amplitude ne perturbe les transmissions au sein de la ligne de transmission, plusieurs solutions peuvent être envisagées. On peut, par exemple, adapter l'amplificateur de sortie 3 de sorte qu'il supprime automatiquement la modulation d'amplitude introduite en appliquant à son tour une modulation complémentaire (antagoniste). En variante, le dispositif peut comporter un second module de modulation, placé juste avant l'amplificateur de sortie 3, et destiné à appliquer aux signaux modulés une modulation complémentaire (antagoniste).

Par ailleurs, on peut également équiper les différentes portions fibrées de la ligne de transmission de dispositifs selon l'invention présentant des fréquences de modulation différentes. On constitue ainsi une installation selon l'invention. Cela peut notamment permettre de suivre le trajet de paquets de données au sein d'un réseau et de déterminer à distance les différents composants responsables de pertes de puissance. Il devient alors possible de suivre l'évolution des pertes de puissance introduites par l'une au moins des fibres dans les différentes portions d'une ligne de transmission.

Bien entendu, les circuits de modulation, de détection et de contrôle présentés ci-avant ne sont donnés qu'à titre d'exemple illustratif et peuvent faire l'objet de très nombreuses variantes et adaptations.

L'invention propose également un procédé de mesure dynamique de perte de puissance dans une ligne de transmission optique comprenant au moins une fibre optique 2 dont l'entrée E peut recevoir des signaux optiques et la sortie S peut délivrer lesdits signaux optiques.

Celui-ci peut être mis en oeuvre à l'aide du dispositif et de l'installation présentés ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé comporte une première étape dans laquelle on module l'amplitude des signaux optiques avec un signal de modulation basse fréquence qui présente un indice de modulation Ind Mod inversement proportionnel à la puissance d'entrée Pe des signaux optiques (et de préférence inversement proportionnel à la puissance d'entrée Pe des signaux primaires), et une seconde étape dans laquelle on extrait des signaux modulés Pd, en sortie de la fibre 2, des informations primaires représentatives de l'amplitude de sortie du signal de modulation, puis l'on déduit de ces informations primaires des informations secondaires représentatives d'une variation de perte de puissance introduite par la fibre 2.

Le procédé peut également comporter une étape complémentaire d'ajustement (ou de régulation) dans laquelle, en cas de détection d'une variation de perte de puissance (non autorisée) introduite par la fibre 2, on modifie la puissance Pd des signaux modulés délivrés par la sortie S de la fibre 2 en fonction de la variation de perte de puissance détectée.

On pourrait notamment prévoir, dans le module de détection, un filtre passe-bas en parallèle du filtre passe-bande, de manière à mesurer également la puissance optique totale des signaux modulés en sortie de la fibre.

## Revendications

1. Dispositif optique de mesure dynamique de perte de puissance dans une ligne de transmission optique comprenant au moins une fibre optique (2) comportant une entrée (E) propre à recevoir des signaux optiques et une sortie (S) pour délivrer lesdits signaux, **caractérisé en ce qu'**il comporte des moyens de modulation (4) placés en amont de ladite entrée (E) et agencés pour moduler l'amplitude desdits signaux optiques avec un signal de modulation basse fréquence présentant un indice de modulation (Ind Mod) inversement proportionnel à la puissance d'entrée (Pe) des signaux optiques, et des moyens de détection (7) placés en aval de ladite sortie (S) et agencés pour extraire desdits signaux optiques modulés des informations primaires représentatives de l'amplitude de sortie du signal de modulation, et déduire desdites informations primaires des informations secondaires représentatives d'une variation de perte de puissance dans la fibre (2).

2. Dispositif selon la revendication 1, **caractérisé en ce que** lesdits moyens de détection (7) comprennent des moyens de comparaison (10) agencés pour comparer lesdites informations primaires à une valeur choisie (C) représentative d'une perte de puissance nominale dans la fibre, et délivrer des informations secondaires représentatives de l'écart entre lesdites informations secondaires et ladite valeur choisie (C).

3. Dispositif selon la revendication 2, **caractérisé en ce que** lesdits moyens de comparaison (10) délivrent des informations secondaires représentatives de l'amplitude dudit écart.

4. Dispositif selon la revendication 2, **caractérisé en ce que** lesdits moyens de comparaison (10) délivrent des informations secondaires à deux états, un premier état étant associé à un écart positif, et un second état étant associé à un écart négatif ou nul.

5. Dispositif selon la revendication 1, **caractérisé en ce qu'**il comprend des moyens de contrôle (11) couplés auxdits moyens de détection (7) et à la sortie (S) de la fibre (2), et agencés, en cas de détection d'une variation de perte de puissance introduite par la fibre (2), pour modifier la puissance des signaux optiques délivrés par la sortie de la fibre (2) en fonction de ladite variation de perte de puissance détectée.

6. Dispositif selon la revendication 5, **caractérisé en ce que** lesdits moyens de contrôle (11) comprennent un atténuateur optique variable (12) couplé à la sortie (S) de la fibre (2).

7. Dispositif selon l'une des revendications 1 à 6, **caractérisé en ce qu'**il comprend un module auxiliaire agencé pour supprimer desdits signaux modulés, sortis de la fibre (2), la modulation d'amplitude introduite par lesdits moyens de modulation (4).

8. Installation de transmission de signaux optiques représentatifs de données, comprenant une ligne de transmission optique constituée d'une multiplicité de fibres optiques (2) raccordées par des amplificateurs optiques (1,3) délivrant chacun des signaux optiques, **caractérisée en ce que** chaque fibre optique (2) est couplée à un dispositif optique selon l'une des revendications 1 à 7.

9. Installation selon la revendication 8, **caractérisée en ce que** les dispositifs délivrent des signaux de modulation à des fréquences différentes.

10. Procédé de mesure dynamique de perte de puissance dans une ligne de transmission optique comportant au moins une fibre optique (2) comprenant une entrée (E) propre à recevoir des signaux optiques et une sortie (S) pour délivrer lesdits signaux, **caractérisé en ce qu'**il consiste à moduler l'amplitude desdits signaux optiques avec un signal de modulation basse fréquence présentant un indice de modulation inversement proportionnel à la puissance d'entrée (Pe) des signaux optiques, puis i) à extraire desdits signaux modulés des informations primaires représentatives de l'amplitude de sortie du signal de modulation, et ii) à déduire desdites informations primaires des informations secondaires représentatives d'une variation de perte de puissance dans la fibre (2).

11. Procédé selon la revendication 10, **caractérisé en ce que** l'on procède à une comparaison entre lesdites informations secondaires et une valeur choisie (C) représentative d'une perte de puissance nominale dans la fibre (2), de manière à délivrer des informations secondaires représentatives de l'écart entre lesdites informations primaires et ladite valeur choisie.

12. Procédé selon la revendication 11, **caractérisé en ce que** l'on délivre des informations secondaires représentatives de l'amplitude dudit écart.

13. Procédé selon la revendication 11, **caractérisé en ce que** l'on délivre des informations secondaires à deux états, un premier état étant associé à un écart positif, et un second état étant associé à un écart négatif ou nul.

14. Procédé selon la revendication 10, **caractérisé en ce qu'**en cas de détection d'une variation de perte de puissance dans la fibre (2), on modifie la puissance des signaux modulés délivrés par la sortie (S) de la fibre (2) en fonction de ladite variation détectée.

15. Procédé selon la revendication 10, **caractérisé en ce que** l'on procède à la suppression de la modulation d'amplitude en aval de la sortie de la fibre (2).

16. Procédé selon l'une des revendications 10 à 15, dans lequel on prévoit une multiplicité de fibres optiques (2) raccordées par des amplificateurs optiques (1,3) délivrant chacun des signaux optiques, **caractérisé en ce que** l'on procède à l'entrée (E) des différentes fibres (2) à des modulations d'amplitude à l'aide de signaux de modulation de fréquences différentes.

## Patentansprüche

1. Optische Vorrichtung zur dynamischen Messung des Leistungsverlustes in einer optischen Übertragungsleitung, beinhaltend mindestens eine Lichtleitfaser (2), welche mit einem Eingang (E), der optische Signale empfangen kann, sowie mit einem Ausgang (S), der die besagten optischen Signale liefern kann, versehen ist, **dadurch gekennzeichnet, daß** sie Modulationsmittel (4) beinhaltet, die im Signalweg vor dem besagten Eingang (E) liegen und dafür ausgelegt sind, die Amplitude der besagten optischen Signale mit einem niederfrequenten Modulationssignal zu modulieren, welches einen zur Eingangsleistung (Pe) der optischen Signale umgekehrt proportionalen Modulationsindex (Mod Ind) bewirkt, sowie Detektionsmittel (7) beinhaltet, die im Signalweg hinter dem besagten Ausgang (S) liegen und dafür ausgelegt sind, aus den besagten modulierten optischen Signalen primäre Informationen zu extrahieren, welche repräsentativ für die Ausgangsamplitude des Modulationssignals sind, und aus den besagten primären Informationen sekundäre Informationen abzuleiten, die repräsentativ für eine Änderung des Leistungsverlustes in der Faser (2) sind.

2. Vorrichtung gemäß Anspruch 1, **dadurch gekennzeichnet, daß** die besagten Detektionsmittel (7) Vergleichsmittel (10) beinhalten, die dafür ausgelegt sind, die besagten primären Informationen mit einem gewählten Wert (C) zu vergleichen, welcher repräsentativ für einen Leistungsnennverlust in der Faser ist, und sekundäre Informationen zu liefern, die repräsentativ für die Abweichung zwischen den besagten primären Informationen und dem besagten gewählten Wert (C) sind.

3. Vorrichtung gemäß Anspruch 2, **dadurch gekennzeichnet, daß** die besagten Vergleichsmittel (10) sekundäre Informationen liefern, die repräsentativ für die Amplitude der besagten Abweichung sind.

4. Vorrichtung gemäß Anspruch 2, **dadurch gekennzeichnet, daß** die besagten Vergleichsmittel (10) sekundäre Informationen in Form von zwei Zuständen liefern, wobei ein erster Zustand einer positiven Abweichung und ein zweiter Zustand einer negativen Abweichung oder null zugeordnet ist.

5. Vorrichtung gemäß Anspruch 1, **dadurch gekennzeichnet, daß** sie Kontrollmittel (11) beinhaltet, die mit den besagten Detektionsmitteln (7) und dem Ausgang (S) der Faser (2) gekoppelt sind und dafür ausgelegt sind, im Fall der Detektion einer Veränderung des durch die Faser (2) verursachten Leistungsverlustes die Leistung der über den Ausgang (S) der Faser (2) abgegebenen optischen Signale in Abhängigkeit von der besagten detektierten Änderung des Leistungsverlustes zu modifizieren.

6. Vorrichtung gemäß Anspruch 5, **dadurch gekennzeichnet, daß** die besagten Kontrollmittel (11) ein variables optisches Dämpfungsglied (12) beinhalten, das mit dem Ausgang (S) der Faser (2) gekoppelt ist.

7. Vorrichtung gemäß einem der Ansprüche 1 bis 6, **dadurch gekennzeichnet, daß** sie ein Zusatzmodul beinhaltet, das dafür ausgelegt ist, aus den besagten modulierten Signalen, die von der Faser (2) abgegeben werden, die durch die besagten Modulationsmittel (4) bewirkte Amplitudenmodulation zu unterdrücken.

8. Anlage zur Übertragung optischer Signale, welche Daten repräsentieren, beinhaltend eine optische Übertragungsleitung, bestehend aus mehreren Lichtleitfasern (2), welche über optische Verstärker (1, 3) angeschlossen sind, die jeweils optische Signale liefern, **dadurch gekennzeichnet, daß** jede Lichtleitfaser (2) mit einer Vorrichtung gemäß einem der Ansprüche 1 bis 7 gekoppelt ist.

9. Anlage gemäß Anspruch 8, **dadurch gekennzeichnet, daß** die Vorrichtungen Modulationssignale mit unterschiedlichen Frequenzen liefern.

10. Verfahren zur dynamischen Messung des Leistungsverlustes in einer optischen Übertragungsleitung; beinhaltend mindestens eine Lichtleitfaser (2), welche mit einem Eingang (E), der optische Signale empfangen kann, sowie mit einem Ausgang (S), der die besagten optischen Signale liefern kann, versehen ist, **dadurch gekennzeichnet, daß** es darin besteht, die Amplitude der besagten optischen Signale mit einem niederfrequenten Modulationssignal zu modulieren, welches einen zur Eingangsleistung (Pe) der optischen Signale umgekehrt proportionalen Modulationsindex (Mod Ind) bewirkt, und anschließend i) aus den besagten modulierten optischen Signalen primäre Informationen zu extrahieren, welche repräsentativ für die Ausgangsamplitude des Modulationssignals sind, und ii) aus den besagten primären Informationen sekundäre Informationen abzuleiten, die repräsentativ für eine Änderung des Leistungsverlustes in der Faser (2) sind.

11. Verfahren gemäß Anspruch 10, **dadurch gekennzeichnet, daß** ein Vergleich zwischen den besagten sekundären Informationen und einem gewählten Wert (C), welcher repräsentativ für einen Leistungsnennverlust in der Faser (2) ist, so durchgeführt wird, daß sekundäre Informationen geliefert werden, die repräsentativ für die Abweichung zwischen den besagten primären Informationen und dem besagten gewählten Wert sind.

12. Verfahren gemäß Anspruch 11, **dadurch gekennzeichnet, daß** sekundäre Informationen geliefert werden, die repräsentativ für die Amplitude der besagten Abweichung sind.

13. Verfahren gemäß Anspruch 11, **dadurch gekennzeichnet, daß** sekundäre Informationen in Form von zwei Zuständen geliefert werden, wobei ein erster Zustand einer positiven Abweichung und ein zweiter Zustand einer negativen Abweichung oder null zugeordnet ist.

14. Verfahren gemäß Anspruch 10, **dadurch gekennzeichnet, daß** bei Detektion einer Änderung des Leistungsverlustes in der Faser (2) die Leistung der über den Ausgang (S) der Faser (2) abgegebenen modulierten Signale in Abhängigkeit von der besagten detektierten Änderung modifiziert wird.

15. Verfahren gemäß Anspruch 10, **dadurch gekennzeichnet, daß** im Signalweg hinter dem Ausgang der Faser (2) eine Unterdrückung der Amplitudenmodulation vorgenommen wird.

16. Verfahren gemäß einem der Ansprüche 10 bis 15, in welchem mehrere Lichtleitfasern (2) vorgesehen sind, welche über optische Verstärker (1, 3) angeschlossen sind, die jeweils optische Signale liefern, **dadurch gekennzeichnet, daß** am Eingang (E) der verschiedenen Fasern (2) mit Hilfe von Modulationssignalen unterschiedlicher Frequenzen Amplitudenmodulationen vorgenommen werden.

## Claims

1. An optical system for dynamically measuring power loss in an optical transmission line including at least one optical fiber (2) having an entry end (E) adapted to receive optical signals and an exit end (S) adapted to deliver said signals, which system is **characterized in that** it comprises modulation means (4) upstream from said entry end (E) and adapted to modulate the amplitude of said optical signals with a low-frequency modulation signal having a modulation index (Ind Mod) inversely proportional to the input power (Pe) of the optical signals, and detection means (7) downstream from said exit end (S) and adapted to extract from said modulated optical signals primary information representative of the output amplitude of the modulation signal and to deduce from said primary information secondary information representative of a variation in the power loss in the fiber (2).

2. A system according to claim 1, **characterized in that** said detection means (7) include comparator means (10) adapted to compare said primary information to a chosen value (C) representative of a nominal power loss in the fiber and to deliver secondary information representative of the difference between said secondary information and said chosen value (C).

3. A system according to claim 2, **characterized in that** said comparator means (10) are adapted to deliver secondary information representative of the amplitude of said difference.

4. A system according to claim 2, **characterized in that** said comparator means (10) are adapted to deliver secondary information with two states, of which a first state is associated with a positive difference and a second state is associated with a negative or zero difference.

5. A system according to claim 1, **characterized in that** it includes control means (11) coupled to said detection means (7) and to the exit end (S) of the fiber (2) and adapted to modify the power of the optical signals delivered by the exit end of the fiber (2) as a function of any detected variation in the power loss induced by the fiber (2).

6. A system according to claim 5, **characterized in that** said control means (11) include a variable optical attenuator (12) coupled to the exit end (S) of the fiber (2).

7. A system according to any one of claims 1 to 6, **characterized in that** it includes an auxiliary module adapted to suppress the amplitude modulation applied by said modulation means (4) from said modulated signals leaving the fiber (2).

8. An installation for transmitting optical signals representative of data and including an optical transmission line comprising a multiplicity of optical fibers (2) connected by optical amplifiers (1, 3) each adapted to deliver optical signals, which installation is **characterized in that** each optical fiber (2) is coupled to an optical system according to any one of claims 1 to 7.

9. An installation according to claim 8, **characterized in that** the optical systems are adapted to deliver modulation signals at different frequencies.

10. A method of dynamically measuring power loss in an optical transmission line comprising an optical fiber (2) having an entry end (E) adapted to receive optical signals and an exit end (S) adapted to deliver said signals, which method is **characterized in that** the amplitude of said optical signals is modulated with a low-frequency modulation signal having a modulation index inversely proportional to the input power (Pe) of the optical signals, and then i) primary information representative of the output amplitude of the modulation signal is extracted from said modulated signals, and ii) secondary information representative of a variation in the power loss in the fiber (2) is deduced from said primary information.

11. A method according to claim 10, **characterized in that** said secondary information and a chosen value (C) representative of a nominal power loss in the fiber (2) are compared to deliver secondary information representative of the difference between said primary information and said chosen value.

12. A method according to claim 11, **characterized in that** said secondary information is representative of the magnitude of said difference.

13. A method according to claim 11, **characterized in that** said secondary information has two states, of which a first state is associated with a positive difference and a second state is associated with a negative or zero difference.

14. A method according to claim 10, **characterized in that** the power of the modulated signals delivered by the exit end (S) of the fiber (2) is modified as a function of any variation detected in the power loss in the fiber (2).

15. A method according to claim 10, **characterized in that** the amplitude modulation is eliminated downstream from the exit end of the fiber (2).

16. A method according to any one of claims 10 to 15, **characterized in that** amplitude modulation using modulation signals with different frequencies is applied at the entry ends (E) of a plurality of optical fibers (2) connected by optical amplifiers (1, 3) each delivering optical signals.
